# EUROPÄISCHE PATENTANMELDUNG

(11) **EP 1 459 912 A1**
(43) Veröffentlichungstag der Anmeldung: **22.09.2004**
(21) Anmeldenummer: 03005558.6
(22) Anmeldetag: 12.03.2003
(51) Int. Cl.: B60C 25/05, B60C 25/00

(54) **Vorrichtung zur Demontage eines im Reifen angeordneten Notlaufstützkörpers von einer Felge**

(71) Anmelder: Continental Aktiengesellschaft, 30165 Hannover (DE)
(72) Erfinder: Winkler, Jens, 30173 Hannover (DE); Doering, Werner, 30823 Garbsen (DE); Dinic, Miroslaw, 30455 Hannover (DE); Dall'Antonia, Michael, 30453 Hannover (DE)

(57) **Zusammenfassung**

Die Erfindung betrifft eine Vorrichtung zur zur Demontage eines im Reifen angeordneten Notlaufstützkörpers von einer Felge mit Mitteln zum Fixieren der Felge auf einer Felgenaufnahme und mit einem Abdrückmittel.
Um eine Vorrichtung zu schaffen, mit welcher die Demontage des Notlaufstützkörpers von der Felge auf eine sichere und einfache Weise erfolgt, wird vorgeschlagen, dass die Felgenaufnahme (6) und das Abdrückmittel (14) relativ zueinander in axialer Richtung (11) der Vorrichtungsmittelachse (4) verfahrbar sind.

## Beschreibung

Die Erfindung betrifft eine Vorrichtung zur Demontage eines im Reifen angeordneten Notlaufstützkörpers von einer Felge mit Mitteln zum Fixieren der Felge auf einer Felgenaufnahme und mit einem Abdrückmittel.

Ein Nachteil von schlauchlosen Luftreifen ist das mögliche Auftreten einer Undichtigkeit, wodurch der Luftdruck im Reifen abfällt und der Reifen kollabiert. Bei einer hohen Fahrzeuggeschwindigkeit kann das plötzliche Entweichen der Luft im Reifen zu gefährlichen Situationen führen, in denen der Fahrer die Kontrolle über sein Fahrzeug verliert. Ferner kann der Reifen bei einem Druckverlust dadurch beschädigt werden, dass die Fahrzeugfelge bzw. das Felgenhorn sich in die Innenseele und darüber liegende Lagen einschneidet.

Für Luftreifen sind verschiedene Notlaufstützkörper-Systeme bekannt.
Die DE 197 07 090 A1 offenbart ein Fahrzeugrad mit einem innerhalb des Luftreifenhohlraumes auf der Felge abgestützten Notlaufstützkörper, der aus einem schalenförmigen Ringkörper gebildet wird. Der Notlaufstützkörper wird über ein oder mehrere Stützelemente auf der Felge abgestützt. Die Stützelemente gehen dabei in den schalenförmigen Ringkörper über und sind entweder ein Teil desselben oder bestehen aus einem im Vergleich zum schalenförmigen Ringkörper anderen Werkstoff.

Insbesondere bei einteiligen Notlaufstützkörpem tritt in der Regel das Problem auf, den Notlaufstützkörper auf die Felge zu montieren oder zu demontieren. Die Demontage des Notlaufstützkörpers in den Reifen erweist sich deswegen als schwierig, weil der Außendurchmesser der Felge größer ist als der Innendurchmesser des Notlaufstützkörpers und der Notlaufstützkörper zudem fest auf der Felge sitzt. Es ist bekannt, den Notlaufstützkörper mit herkömmlichen Montagemaschinen und manuell unter Zuhilfenahme von stangenförmigen Reifenmontierwerkzeugen von der Felge zu demontieren, wobei ein hoher Kraftaufwand erforderlich ist. Der Nachteil bei dieser Art der Demontage ist, dass der Reifenmonteur sowohl ein gewisses Maß an Geschicklichkeit besitzen als auch über die entsprechenden Kräfte verfügen muss. Des Weiteren besteht eine gewisse Gefährdung, da das Reifenmontierwerkzeug beim Demontagevorgang abspringen kann. Die lokal wirkenden Demontagekräfte können ebenfalls zu einer hohen Beanspruchung des ringförmigen Schalenkörpers führen.

Der Erfindung liegt die Aufgabe zugrunde, eine Vorrichtung zu schaffen, mit welcher die Demontage eines in einem Reifen angeordneten Notlaufstützkörpers von der Felge auf eine sichere und einfache Weise erfolgt.

Gelöst wird die Aufgabe gemäß dem Oberbegriff und den kennzeichnenden Merkmalen von Anspruch 1 dadurch, dass die Felgenaufnahme und das Abdrückmittel relativ zueinander in axialer Richtung der Vorrichtungsmittelachse verfahrbar sind..
Die Aufgabe wird ebenfalls gemäß dem Oberbegriff und den kennzeichnenden Merkmalen des nebengeordneten Anspruchs 7 gelöst.

Ein Vorteil der Erfindung ist insbesondere darin zu sehen, dass durch die erfindungsgemäße Vorrichtung der Nofallstützkörper mit einer gleichmäßig über den Notlaufstützkörper verteilten Demontagekraft von der Felge demontiert wird und der Einsatz von manuellen Reifenmontierwerkzeugen entfällt. Der Notlaufstützkörper wird nunmehr mit Hilfe der Vorrichtung auf eine sichere und einfache Weise von der Felge demontiert, ohne dass dabei ein hoher Kraftaufwand durch den Reifenmonteur erforderlich ist. Außerdem wird durch die Vorrichtung die Verletzungsgefahr des Monteurs ausgeschlossen, da der Einsatz eines stangenförmigen Reifenmontierwerkzeuges nicht mehr notwendig ist.

Ein weiterer entscheidender Vorteil ist darin zu sehen, dass durch die gleichmäßig verteilte Demontagekraft keine Beschädigung des Notlaufstützkörpers, des Reifens oder der Felge erfolgt und diese Teile wieder verwendet werden können.

In einer vorteilhaften Weiterbildung der Erfindung ist vorgesehen, dass das Abdrückmittel beim Demontagevorgang gleichzeitig gegen eine Reifenseitenwand und den im Reifenhohlraum auf der Felge angeordneten Notlaufstützkörper gedrückt wird. Auf diese Weise wird eine gleichmäßig auf den Umfang des Notlaufstützkörpers verteilte Demontagekraft die Bauteile insgesamt einer geringeren Beanspruchung ausgesetzt sind.

In einer weiteren vorteilhaften Weiterbildung der Erfindung ist vorgesehen, dass das Abdrückmittel ein geschlossener Abdrückring ist. Der geschlossene Abdrückring bewirkt eine gleichmäßig verteilte Flächenpressung zwischen Abdrückmittel sowie Reifenseitenwand. Dadurch ist der Reifen einer geringeren mechanischen Beanspruchung ausgesetzt.

In einer weiteren vorteilhaften Weiterbildung der Erfindung ist vorgesehen, dass der Innendurchmesser des Abdrückringes geringfügig größer ist als der Außendurchmesser der Felge. Durch den kleinen Durchmesserspalt zwischen Felge und Abdrückring wird der Reifen einer geringeren mechanischen Beanspruchung ausgesetzt.

In einer weiteren vorteilhaften Weiterbildung der Erfindung ist vorgesehen, dass die Verfahrbewegung der Felgenaufnahme hydraulisch angetrieben wird. Der hydraulische Antrieb lässt sich einfach in die Vorrichtung integrieren. Ferner kann durch diesen Antrieb eine ausreichende Demontagekraft bereit gestellt werden. Im Vergleich zu einem pneumatischen Antrieb ist gleichmäßiger Druckauf- und abbau erzielbar.

In einer weiteren vorteilhaften Weiterbildung der Erfindung ist vorgesehen, dass die Verfahrbewegung der Felgenaufnahme über Führungselemente geführt wird. Die Führungselemente stabilisieren die Verfahrbewegung der Felgenaufnahme und verhindern u.a. ein Verkanten der Felgenaufnahme während des Demontagevorganges.

Anhand eines Ausführungsbeispiels soll die Erfindung näher erläutert werden.

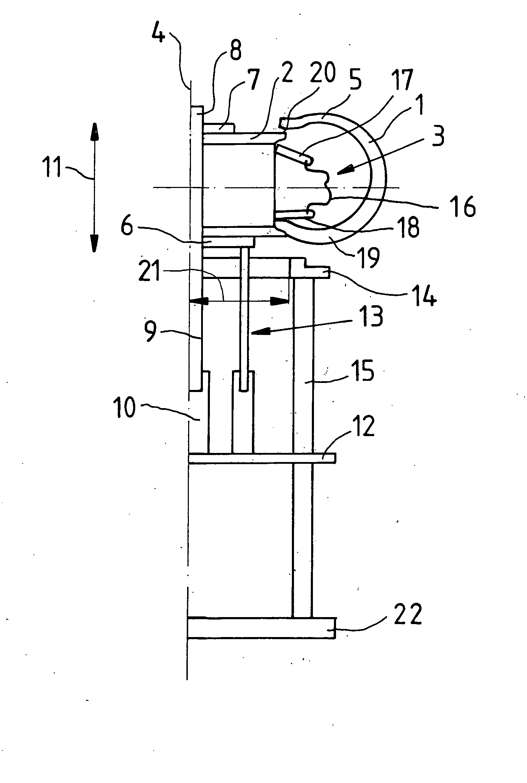

Die einzige Figur zeigt eine Seitenansicht der erfindungsgemäßen Vorrichtung. Es handelt sich um eine achsensymmetrische Darstellung der Vorrichtung des Reifens 1, der Felge 2 und des Notlaufstützkörpers 3, wobei die dargestellten Teile achsen- bzw. rotationssymmetrisch zur Vorrichtungsmittelachse 4 sind. Nach einer herkömmlichen Demontage des oberen Reifenwulstes 5 wird der Verbund aus Felge 2, Reifen 1 und Notlaufstützkörper 3 auf der Felgenaufnahme 6 aufgelegt. Die Fixierung der Felge auf der Felgenaufnahme erfolgt anschließend mit der Klemmmutter 7 und der Klemmschraube 8, die fest mit der Felgenaufnahme 6 verbunden ist. Die Felgenaufnahme 6 ist auf der Unterseite mit einer verfahrbaren Hydraulikstange 9 verbunden, die über den auf der Basisplatte 12 montierten Hydraulikzylinder 10 nach oben oder unten bewegt wird. Der Hydraulikzylinder 10 wird über ein in der Figur nicht dargestelltes Hydraulikaggregat angetrieben. Die gesamte Einheit aus Felgenaufnahme 6, Hydraulikstange 9, Felge 2, Reifen 1 und Notlaufstützkörper 3 wird beim Demontagevorgang aus der in der Figur dargestellten Anfangsposition in der Verfahrrichtung 11 nach unten bewegt. Diese Verfahrbewegung wird zusätzlich über zwei oder mehrere koaxial zur Vorrichtungsmittelachse 4 angeordnete Führungselemente 13 gestützt und stabilisiert. Der Abdrückring 14 ist ebenfalls koaxial zur Vorrichtungsmittelachse 4 ausgerichtet, in der ebenfalls die Felgenaufnahme-, Notlaufstützkörper- und Felgen-Mittelachse liegen. Der Abdrückring 14 ist gegenüber der Felgenaufnahme 6 ortsfest über Rahmenelemente 15 mit der Basisplatte 12 verbunden. Der Notlaufstützkörper 3 setzt sich aus dem ringförmigen, metallischen Schalenelement 16 sowie dem oberen und unteren Stützelement 17 und 18 zusammen, wobei diese Stützelemente aus einem flexiblen Kautschukmaterial bestehen. Beim Demontagevorgang wird die gesamte Einheit aus Felgenaufnahme 6, Felge 2, Notlaufstützkörper 3 und Reifen 1 nach unten verfahren. Der ortsfeste Abdrückring 14 wird dabei gegen die untere Reifenseitenwand 19 gedrückt, die wiederum gegen das untere Stützelement 18 drückt. Anschließend wird der Anpressdruck über das Schalenelement 15 auf das Stützelement 17 weitergeleitet, welches schließlich innenseitig gegen das obere Felgenhorn 20 gedrückt wird. Die Verfahrbewegung der Felgenaufnahme 6 wird so lange nach unten fortgeführt, bis das obere Stützelement 17 schließlich über das Felgenhorn 20 springt. Nach diesem Demontagevorgang wird das untere Stützelement 18 auf eine herkömmliche Art demontiert. Besonders vorteilhaft ist es, wenn der Innendurchmesser 21 der Felgenaufnahme 6 nur wenige Millimeter größer ist als der größte Außendurchmesser der Felge 2. Auf diese Weise lässt sich das obere Stützelement 17 mit einem geringstmöglichen Kraftaufwand über das Felgenhorn 20 drücken. Unterhalb der Basisplatte 12 besitzen die ortsfesten Rahmenelemente 15 eine Verlängerung, die wiederum mit einer auf dem Boden stehenden Grundplatte 22 fest verbunden sind.

### Bezugszeichenliste

### (ist Teil der Beschreibung)

- 1: Reifen
- 2: Felge
- 3: Notlaufstützkörper
- 4: Vorrichtungsmittelachse
- 5: oberer Reifenwulst
- 6: Felgenaufnahme
- 7: Klemmmutter
- 8: Klemmschraube
- 9: Hydraulikstange
- 10: Hydraulikzylinder
- 11: Verfahrrichtung
- 12: Basisplatte
- 13: Führungselement
- 14: Abdrückring
- 15: Rahmenelement
- 16: Schalenelement
- 17: oberes Stützelement
- 18: unteres Stützelement
- 19: untere Reifenseitenwand
- 20: oberes Felgenhorn
- 21: Innendurchmesser des Abdrückringes
- 22: Grundplatte

## Patentansprüche

1. Vorrichtung zur Demontage eines im Reifen (1) angeordneten Notlaufstützkörpers (3) von einer Felge (2) mit Mitteln zum Fixieren der Felge (2) auf einer Felgenaufnahme (6) und mit einem Abdrückmittel (14),
**dadurch gekennzeichnet, dass**
die Felgenaufnahme (6) und das Abdrückmittel (14) relativ zueinander in axialer Richtung (11) der Vorrichtungsmittelachse (4) verfahrbar sind.

2. Vorrichtung nach Anspruch 1,
**dadurch gekennzeichnet, dass**
das Abdrückmittel (14) beim Demontagevorgang gleichzeitig gegen eine Reifenseitenwand (19) und den im Reifenhohlraum auf der Felge (2) angeordneten Notlaufstützkörper (3) gedrückt wird.

3. Vorrichtung nach Anspruch 1 oder 2,
**dadurch gekennzeichnet, dass**
das Abdrückmittel (14) ein geschlossener Abdrückring (14) ist.

4. Vorrichtung nach einem der Ansprüche 1 bis 3,
**dadurch gekennzeichnet, dass**
das der Innendurchmesser (21) des Abdrückringes (14) geringfügig größer ist als der Außendurchmesser der Felge (2).

5. Vorrichtung nach einem der Ansprüche 1 bis 4,
**dadurch gekennzeichnet, dass**
die Verfahrbewegung der Felgenaufnahme (6) hydraulisch angetrieben wird.

6. Vorrichtung nach einem der Ansprüche 1 bis 5,
**dadurch gekennzeichnet, dass**
die Verfahrbewegung der Felgenaufnahme (6) über Führungselemente (13) geführt wird.

7. Verfahren zur Demontage eines im Reifen (1) angeordneten Notlaufstützkörpers (3) von einer Felge (2) mit Mitteln zum Fixieren der Felge (2) auf einer Felgenaufnahme (6) und mit einem Abdrückmittel (14),
**dadurch gekennzeichnet, dass**
die Felgenaufnahme (6) und das Abdrückmittel (14) relativ zueinander in axialer Richtung (11) der Vorrichtungsmittelachse (4) verfahren und dabei das Abdrückmittel (14) gegen eine Reifenseitenwand (19) gedrückt wird.
